# FASCICULE DE BREVET EUROPEEN

(11) **EP 3 267 935 B1**
(45) Date de publication et mention de la délivrance du brevet: **14.10.2020**
(21) Numéro de dépôt: 16708167.8
(22) Date de dépôt: 07.03.2016
(51) Int. Cl.: A61C 5/77

(54) **FABRICATION D'UNE PROTHESE DENTAIRE**
HERSTELLUNG EINER ZAHNPROTHESE
PRODUCTION OF A DENTAL PROSTHESIS

(30) Priorité: 09.03.2015 FR 1551959
(43) Date de publication de la demande: 17.01.2018
(73) Titulaire: Lyra Holding, 1060 Saint-Gilles (BE)
(72) Inventeur: DEVILLE, Charles, Louis, Marie, 92600 Asnieres sur Seine (FR); LANCIEUX, Cédric, 74700 Cordon (FR); ALLENE, Cédric, Gilbert, 77220 Liverdy-en-Brie (FR)
(74) Mandataire: Novaimo
(86) Numéro de dépôt international: PCT/EP2016/054755
(87) Numéro de publication internationale: WO 2016/142325

(56) Documents cités:
- EP-A1- 2 324 795
- EP-A1- 2 444 028
- US-A1- 2012 177 456
- US-A1- 2012 219 930

## Description

### Domaine technique de l'invention

L'invention porte sur un procédé de fabrication d'une prothèse dentaire sur implant. Elle porte aussi sur un dispositif mettant en oeuvre ce procédé.

### État de la technique

Lorsqu'il est nécessaire de reconstituer une dentition, une méthode de l'état de la technique repose sur l'utilisation d'au moins un implant dentaire directement fixé dans l'ossature osseuse, sur lequel une prothèse dentaire est fixée, par l'intermédiaire d'un pilier implantaire.

Les solutions de l'état de la technique nécessitent souvent des étapes manuelles lors de la fabrication d'une prothèse dentaire.

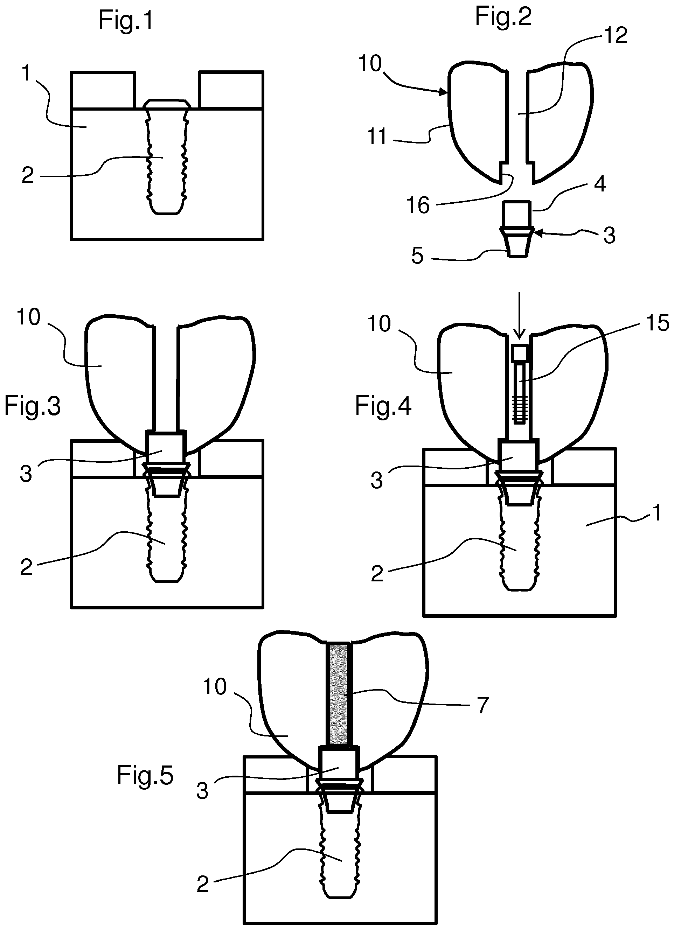

Les figures 1 à 5 illustrent un procédé selon l'état de la technique permettant de remplacer une dent. La figure 1 représente la mâchoire 1 dans la zone où la dent manque, dans laquelle un implant 2 a été fixé de manière traditionnelle. La figure 2 représente une prothèse dentaire 10, destinée à remplacer la dent manquante, qui comprend une surface périphérique 11 imitant au mieux la forme d'une vraie dent et définie en fonction de la forme de l'espace libre provenant des dents voisines. La prothèse dentaire 10 est de plus percée par une ouverture 12 traversante, formant dans sa partie inférieure une connectique 16. En remarque, cette connectique 16 n'est pas détaillée pour une raison de simplification de la représentation, mais elle comprend en pratique une forme complexe. La prothèse dentaire 10 est associée à un pilier 3, qui comprend une première partie 4 destinée à une coopération avec la connectique 16 de la prothèse dentaire 10, et une deuxième partie 5 destinée à coopérer avec l'extrémité externe 6 de l'implant 2. Cette connexion de la prothèse dentaire 10 sur le pilier 3 est verrouillée par un collage. La figure 3 représente l'assemblage de la prothèse dentaire 10 sur l'implant 2, par l'intermédiaire du pilier 3. Cet assemblage est ensuite solidarisé par une vis 15, insérée dans l'ouverture 12 de la prothèse pour être vissé sur l'implant 2, au travers le pilier 3 sur lequel la tête de vis vient en butée, comme illustré par la figure 4. Lorsque cette opération est terminée, l'ouverture 12 de la prothèse dentaire 10 est bouchée par une matière adaptée 7. En remarque, le pilier 3 représente donc une pièce intermédiaire entre la prothèse dentaire et l'implant. Une particularité d'une prothèse sur implant par rapport à une prothèse hors implant provient du fait que la prothèse sur implant comprend une connectique de très petite dimension en partie inférieure, pour coopérer avec un pilier, en général inscrite dans un cylindre de diamètre de l'ordre de 3 mm.

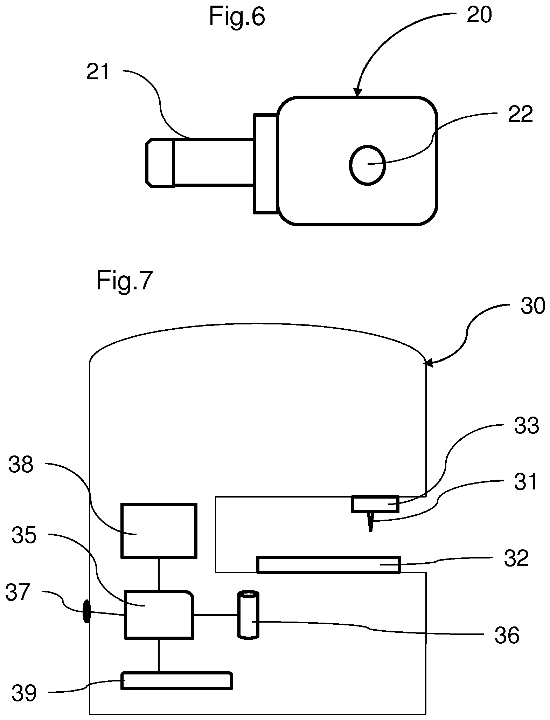

En pratique, la surface extérieure 11 de la prothèse dentaire 10 est parfois usinée chez le dentiste lors de l'opération de restauration, à partir d'un bloc 20 sensiblement parallélépipédique, représenté sur la figure 6, comprenant une ouverture traversant 22 correspondant à la future ouverture traversante 12 de la prothèse dentaire. Ce bloc 20 intègre ainsi la connectique 16 de la future couronne. Enfin, le bloc 20 est fixé à un organe de préhension 21 dont la connectique est adaptée à une fixation sur une machine d'usinage, qui tient le bloc 20 par cet organe de préhension 21 pendant que sa surface extérieure 11 est usinée.

L'inconvénient de cette solution de l'état de la technique décrite ci-dessus provient du fait qu'il est nécessaire de fabriquer au préalable les blocs 20 susmentionnés, de forme complexe du fait de leur connectique. Différents blocs sont formés, correspondant à différents standards de connexion existants, plus précisément aux piliers existants. En pratique, seulement deux types différents de connexion existent, ce qui limite fortement le choix des piliers implantaires et des implants utilisables par cette solution de l'état de la technique. Cette dernière est donc très limitative et n'est pas implémentable sur la plupart des implants existants. Chaque dentiste doit de plus disposer d'un stock des différents blocs 20 existants pour sélectionner au cas par cas celui dont il a besoin. D'autre part, il est difficile d'atteindre une grande précision lors de la réalisation de la prothèse finale avec une telle approche, puisqu'il faut parvenir à un alignement parfait en théorie de la surface extérieure 11 autour de l'ouverture 22 préformée, lors de l'usinage de la prothèse finale. En pratique, il existe toujours un léger décalage, ce qui complique ensuite l'opération finale de fixation de la prothèse en bouche du patient. Enfin, la fabrication globale d'une prothèse est complexe, longue et coûteuse du fait qu'elle nécessite une première étape de fabrication d'un bloc complexe, puis une seconde étape distincte d'usinage du bloc complexe, outre les opérations de logistique de référencement, stockage et transport des blocs comlexes.

Le document US 2012/177456 décrit un procédé de fabrication d'une prothèse dentaire par usinage dans laquelle un outil suit un chemin d'usinage particulier pour usiner la prothèse dentaire dans une brute.

### Objet de l'invention

Le but de la présente invention est de proposer une solution de fabrication d'une prothèse dentaire sur implant qui remédie à tout ou partie des inconvénients de l'état de la technique, particulièrement les inconvénients listés ci-dessus.

Ainsi, un objet de l'invention est de proposer une solution de fabrication d'une prothèse dentaire sur implant plus précise et moins contraignante et plus universelle.

A cet effet, l'invention repose sur un procédé de fabrication d'une prothèse dentaire destinée à une fixation sur un implant, comprenant une étape de fabrication de la paroi extérieure de la prothèse dentaire et une étape de fabrication d'au moins une connectique destinée à une fixation sur au moins un implant en une même opération sur un même dispositif de fabrication à partir d'un bloc plein, ces étapes de fabrication de la prothèse dentaire étant des étapes d'usinage qui utilisent un même outil d'usinage, caractérisé en ce que la géométrie de ladite connectique adaptée audit au moins un implant concerné est sélectionnée parmi une bibliothèque mémorisée dans une mémoire électronique.

Avantageusement, la fabrication d'une connectique peut se faire de manière automatique ou quasi-automatique sur un dispositif de fabrication, apte à une réalisation dans un cabinet dentaire.

Selon un mode de réalisation, l'étape de fabrication d'une connectique avec au moins un implant de la prothèse dentaire comprend la fabrication d'une connectique adaptée pour une connexion directe sur un implant, ou adaptée pour une connexion avec une ou plusieurs pièce(s) intermédiaire(s), comme un pilier, destinée(s) à une fixation sur un implant.

Les étapes de fabrication de la paroi extérieure de la prothèse dentaire et de fabrication d'une connectique destinée à une fixation sur un implant par enlèvement de matière, à partir d'un bloc plein, en disilicate de lithium, ou en céramique feldspathique, en nano-composite, en zircone, en matériau provisoire comme du PMMA, ou du PEEK, un matériau métallique.

Le procédé de fabrication d'une prothèse dentaire peut comprendre les étapes préalable suivantes :
- Détermination de la forme de la paroi extérieure de la prothèse dentaire à fabriquer, par un calculateur ;
- Détermination de la connectique avec un implant de la prothèse dentaire à fabriquer, par un calculateur parmi une bibliothèque mémorisée dans une mémoire électronique.

L'étape de détermination de la connectique avec un implant peut comprendre les sous-étapes suivantes :
- numérisation intra-buccale au niveau de la zone concernée et/ou saisie par une interface homme machine de données déterminant le type d'implant, et transmission des données de numérisation ou de saisies à un calculateur ;
- sélection par un calculateur de la géométrie de la connectique adaptée audit au moins un implant concerné parmi une bibliothèque mémorisée dans une mémoire électronique.

Le procédé de fabrication d'une prothèse dentaire peut comprendre les étapes complémentaires de :
- lecture dans une mémoire électronique de données de stratégies de fabrication, comme des stratégies d'usinage ;
- transmission de commandes de fabrication à un dispositif de fabrication.

Le procédé de fabrication d'une prothèse dentaire peut comprendre une étape de fabrication de plusieurs connectiques par enlèvement de matière pour fabriquer une prothèse dentaire destinée à une fixation sur plusieurs implants à partir d'un bloc unique.

Les étapes de fabrication de la prothèse dentaire sont des étapes d'usinage qui utilisent un même outil d'usinage pour une réalisation des étapes de fabrication en une même opération sur le même dispositif de fabrication.

L'invention porte aussi sur un dispositif de fabrication d'une prothèse dentaire sur implant, comprenant un porte-outil pour un outil et un calculateur, caractérisé en ce que le calculateur est adapté pour exécuter les étapes de la méthode de la revendication 1. Ainsi le calculateur transmet des ordres de pilotage au porte-outil de l'outil pour fabriquer la forme de la paroi extérieure d'une prothèse dentaire et pour fabriquer au moins une connectique destinée à une fixation sur au moins un implant, mettant ainsi en oeuvre un procédé de fabrication d'une prothèse dentaire tel que décrit précédemment.

Le calculateur peut mettre en oeuvre un programme informatique de détermination de la forme de la paroi extérieure de la prothèse dentaire à fabriquer et de détermination de la connectique destinée à une fixation sur au moins un implant ou est relié par un dispositif de communication avec un calculateur externe mettant en œuvre au moins une de ces étapes de détermination et lui transmettant les données numériques résultant de cette détermination.

Le dispositif de fabrication d'une prothèse dentaire peut comprendre un outil d'usinage qui est une fraise d'usinage au moins en partie conique, de longueur supérieure ou égale à 17 mm, et comprenant une extrémité inscrite dans un cylindre de diamètre inférieur ou égal à 1,05 mm.

Le dispositif de fabrication d'une prothèse dentaire peut comprendre une mémoire électronique liée au calculateur sur laquelle est stockée une bibliothèque de connectiques avec implant pour une prothèse dentaire sur implant.

Le dispositif de fabrication d'une prothèse dentaire peut comprendre une interface homme machine permettant à un opérateur de saisir un modèle d'implant utilisé.

L'invention porte aussi sur un système de restauration dentaire, caractérisé en ce qu'il comprend un dispositif de numérisation intra-buccal et un dispositif de fabrication d'une prothèse dentaire selon la revendication 8, et un dispositif de communication entre le dispositif de numérisation intra-buccale et le dispositif de fabrication dentaire. L'invention porte aussi sur un support informatique lisible par un calculateur, caractérisé en ce qu'il comprend un programme informatique enregistré comprenant des moyens de codes de programme informatique de mise en œuvre d'un procédé de fabrication d'une prothèse dentaire sur implant, qui conduisent le dispositif selon la revendication 8 à exécuter les étapes de la méthode de la revendication 1; et comprenant par ailleurs les étapes suivantes :
- détermination automatique ou par saisie par l'intermédiaire d'une interface homme machine d'une ou plusieurs référence(s) de (ou des) implant(s) concerné(s) par une restauration dentaire, transmission de cette ou de ces donnée(s) à un calculateur ;
- sélection par ledit calculateur de la géométrie d'au moins une connectique de prothèse dentaire adaptée à au moins un implant de la zone de restauration dentaire concernée parmi une bibliothèque mémorisée dans une mémoire électronique ;
- transmission de commandes de fabrication d'au moins une connectique de la prothèse dentaire à un dispositif de fabrication, pour fabriquer la au moins une connectique sélectionnée par les étapes précédentes.

Ce procédé de fabrication d'une prothèse dentaire sur implant, 2. peut mettre en oeuvre les étapes suivantes :
- détermination automatique ou par saisie par l'intermédiaire d'une interface homme machine d'une ou plusieurs référence(s) de (ou des) implant(s) concerné(s) par une restauration dentaire, transmission de cette ou de ces donnée(s) à un calculateur ;
- sélection par ledit calculateur de la géométrie d'au moins une connectique d'une prothèse dentaire adaptée à au moins un implant de la zone de restauration dentaire concernée parmi une bibliothèque mémorisée dans une mémoire électronique ;
- éventuellement, lecture dans une mémoire électronique de données de stratégies de fabrication, comme des stratégies d'usinage ;
- transmission de commandes de fabrication d'au moins une connectique de la prothèse dentaire à un dispositif de fabrication, pour fabriquer la au moins une connectique sélectionnée par les étapes précédentes.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
Les figures 1 à 5 représentent des étapes d'un procédé de restauration dentaire selon un état de la technique.
La figure 6 représente un bloc préformé servant de base à un dentiste pour l'usinage d'une prothèse dentaire selon un état de la technique.
La figure 7 représente schématiquement un dispositif de fabrication d'une prothèse dentaire selon un mode de réalisation de l'invention.
La figure 8 représente une fraise d'usinage utilisée par le dispositif de fabrication selon le mode de réalisation de l'invention.
Les figures 9a et 9b représentent des blocs pleins servant de base à un dentiste pour l'usinage de prothèses dentaires selon un mode de réalisation de l'invention.
Les figures 10a et 10b représentent la connectique d'une prothèse dentaire après usinage d'un bloc par le dispositif de fabrication selon un mode de réalisation de l'invention.
La figure 11 représente une prothèse dentaire de type bridge comprenant plusieurs connectiques adaptées pour une connexion sur plusieurs implants selon un mode de réalisation de l'invention.
Les figures 12 à 21 représentent schématiquement les étapes d'un procédé de restauration dentaire intégrant un procédé de fabrication d'une prothèse dentaire selon un mode de réalisation de l'invention.
Les figures 22 à 27 illustrent schématiquement une variante des étapes d'un procédé de restauration dentaire intégrant un procédé de fabrication d'une prothèse dentaire du mode de réalisation de l'invention.
La figure 28 représente schématiquement les étapes du procédé de fabrication d'une prothèse dentaire selon un mode de réalisation de l'invention.
Les figures 29a et 29b représentent une stratégie d'usinage mise en œuvre selon un mode de réalisation de l'invention.

### Description d'un mode de réalisation de l'invention

Le mode de réalisation de l'invention repose sur un dispositif de fabrication 30, représenté par la figure 7, qui comprend un porte-outil 33 prévu pour recevoir un outil d'usinage 31, avantageusement une fraise d'usinage, adapté pour l'usinage d'un bloc qui serait positionné dans un logement 32 adapté à cet effet. Ce dispositif de fabrication comprend aussi un calculateur 35, par exemple un ordinateur de bord ou tout processeur électronique, relié à une mémoire électronique 36 et à un dispositif de communication 37 vers l'extérieur, et éventuellement un écran 38 et/ou un clavier 39. Selon le mode de réalisation, le calculateur 35 met en œuvre un programme d'ordinateur pour la réalisation de tout ou partie des étapes du procédé de fabrication d'une prothèse dentaire qui sera décrit ci-après. Ce dispositif de fabrication comprend avantageusement un module de pilotage et une motorisation des axes à technologie sans balai, souvent appelé par sa dénomination anglaise de « brushless », permettant une précision de déplacement de l'outil d'usinage 31 et une stabilité de la machine garantissant un bon usinage des petites surfaces géométriques.

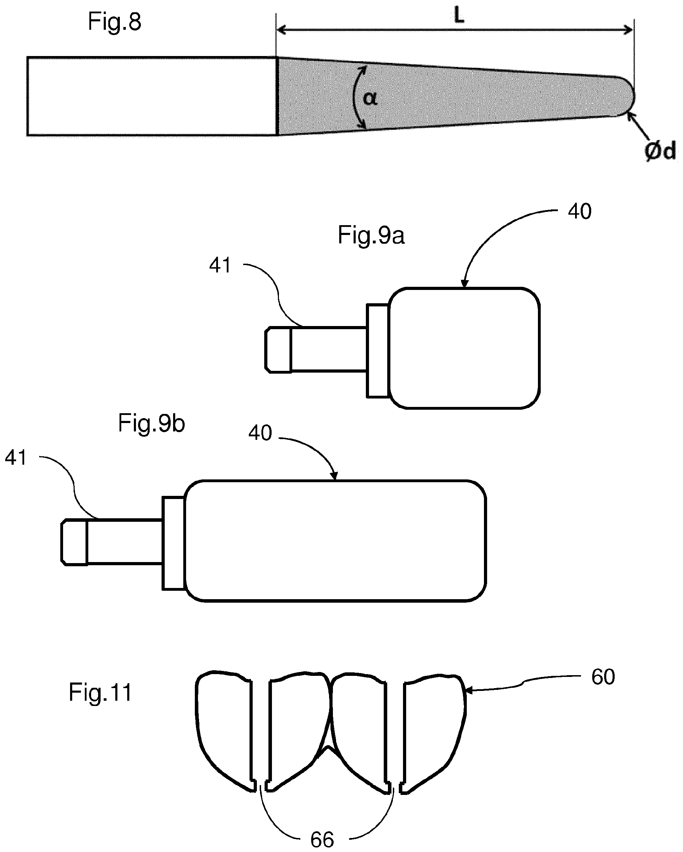

Selon un mode de réalisation, un outil d'usinage 31 utilisé par le dispositif de fabrication est représenté sur la figure 8. Il se présente sous la forme d'une fraise d'usinage, de type fraise diamant, qui comprend une zone de travail de longueur L supérieure ou égale à 17 mm, avantageusement autour de 18 mm, de forme conique d'angle α inférieur ou égal à 5°, et d'extrémité inscrite dans un disque présentant un diamètre d d'environ 1 mm. Sa forme conique lui permet d'avoir une bonne robustesse malgré sa grande longueur travaillante. Le cône de la fraise est dimensionné avec une faible valeur, ce qui lui permet d'usiner de nombreuses connectiques. Sa pointe fine, de diamètre inférieur ou égal à 1,05 mm, permet également de retranscrire les petits détails des connectiques

La figure 9a ou 9b illustre un bloc 40 plein qui sert de base à la fabrication d'une prothèse. Ce bloc se présente de manière semblable au bloc 20 de l'état de la technique représenté à la figure 6, avec la différence essentielle qu'il est plein. Il ne présente pas d'ouverture ni de connectique. Il se présente sous une forme parallélépipédique rectangle. En variante, toute autre forme de base pourrait être envisagée, de volume supérieur à la prothèse qui doit être usinée, par enlèvement de matière sur ledit bloc 40. Cette forme peut être cylindrique, sphérique, en forme de disque... Nous entendons par bloc plein un bloc qui ne présente pas la connectique sur implant préformée comme dans l'état de la technique, ou qui ne comprend pas toutes les connectiques nécessaires. Il est de préférence plein, n'est à dire ne comprenant aucune ouverture. Un tel bloc comprend un organe de préhension 41 qui permet son maintien par le dispositif de fabrication pendant son usinage. En fin d'usinage, l'organe de préhension 41 est coupé et la surface de la prothèse au niveau de la coupe est reprise. Le bloc 40 peut être dans différents matériaux, parmi notamment le disilicate de lithium, la céramique feldspathique, un nano-composite, de la zircone, un matériau métallique, par exemple à base de titane ou de chrome cobalt, un matériau provisoire comme du PMMA, ou du PEEK.

Lorsqu'un patient est traité par un dentiste pour une restauration dentaire basée sur le positionnement d'au moins un implant dentaire dans sa mâchoire, pour obtenir le résultat représenté sur la figure 1 de manière traditionnelle, le dentiste met ensuite en œuvre le procédé de fabrication de la prothèse dentaire associée, qui comprend, selon le mode de réalisation de l'invention, la réalisation simultanée ou quasi simultanée par le même dispositif de fabrication de la totalité de la connectique de la prothèse dentaire destinée à coopérer avec l'implant et de la surface périphérique de la prothèse dentaire, comme cela va être détaillé par la suite. Cette approche présente le grand intérêt de permettre au dentiste de fabriquer toute prothèse en toutes circonstances directement dans son cabinet dentaire, pour traiter au mieux et au plus vite tout patient, sans dépendance envers un stock de blocs complexes et coûteux comme dans la solution de l'état de la technique décrite précédemment et sans être limité à quelques modèles d'implants et/ou de piliers compatibles. En remarque, nous entendons par connectique sur implant une surface de géométrie particulière qui permet un assemblage mécanique avec un implant, soit directement, soit indirectement par l'intermédiaire d'un ou plusieurs composants prothétiques intermédiaire, comme un pilier.

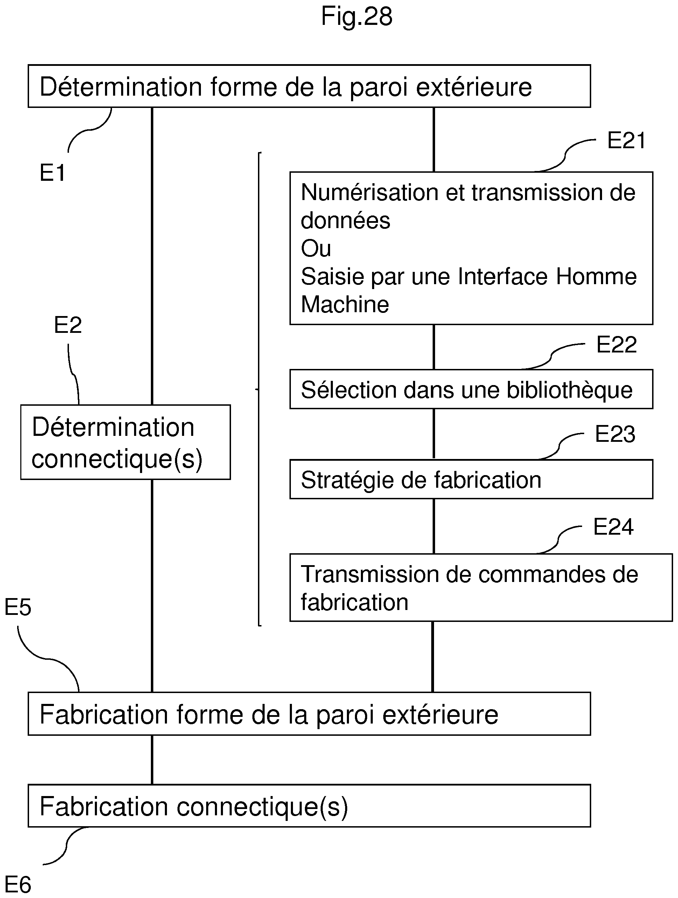

Le dispositif de fabrication participe ainsi à la mise en œuvre d'un procédé de fabrication d'une prothèse dentaire, représenté par la figure 28, qui comprend notamment les étapes suivantes :
- Détermination de la forme de la paroi extérieure E1 de la prothèse ;
- Détermination de la connectique E2 sur implant de la prothèse ;
- A partir d'un bloc plein 40 standard unique, usinage de la forme de la paroi extérieure E5 de la prothèse et usinage de la totalité de la connectique E6 avec implant de la prothèse.

Avantageusement, les deux étapes de détermination E1, E2 sont réalisées par le dispositif de fabrication 30, par un programme d'ordinateur exécuté par son calculateur 35, à partir de données de la bouche du patient, notamment déterminant le type d'implant utilisé pour la restauration dentaire concernée, automatiquement transmises au dispositif de fabrication 30 par l'intermédiaire de son dispositif de communication 37 et/ou manuellement saisies par le dentiste par l'intermédiaire d'une interface homme machine présentée sur l'écran 38 du dispositif de fabrication ou d'un dispositif externe connecté, éventuellement à l'aide d'un clavier 39.

Dans le cadre de l'invention, le même dispositif de fabrication 30 met en œuvre les deux étapes d'usinage E5, E6 mentionnées ci-dessus. Ces deux étapes d'usinage sont mises en œuvre en une même opération d'usinage, simultanément ou successivement. Un grand avantage de la solution provient de la précision de la prothèse finale obtenue. En effet, le fait d'usiner l'ensemble de la prothèse dentaire par le même dispositif de fabrication en une même opération, dans laquelle le bloc 40 reste maintenu par son organe de préhension 41 sans discontinuité pendant toute l'opération, permet d'atteindre une précision parfaite de l'alignement entre d'une part la connectique sur implant de la prothèse et d'autre part la surface périphérique de la dent, sans perte de repère. Pour rappel, dans la solution de l'état de la technique, il s'avère très délicat d'obtenir un bon alignement de la surface périphérique à usiner avec la connectique préformée, ce qui induit des décalages.

L'étape de détermination de la connectique E2 sur implant par le procédé de fabrication peut être en tout ou partie automatisée. Elle peut comprendre les sous-étapes suivantes :
E21 : numérisation de la mâchoire au niveau de la zone à restaurer, notamment du ou des implant(s) concerné(s), transmission des données de numérisation à un calculateur, de préférence le calculateur 35 du dispositif de fabrication 30 par une liaison de communication entre l'appareil de numérisation utilisé, par exemple de type scanner intra-buccal, et le dispositif de communication 37 du dispositif de fabrication 30. Selon le mode de réalisation, cette numérisation met en œuvre une étape de reconnaissance automatique du ou des implant(s) concerné(s) par la restauration. En variante, un opérateur saisit la référence de (ou des) l'implant concerné par l'intermédiaire d'une interface homme machine, de sorte que cette information est transmise à un calculateur qui met en œuvre ce procédé de fabrication ;
E22 : sélection par le calculateur 35 de la géométrie de la connectique adaptée à au moins un implant, de préférence chaque implant, parmi une bibliothèque mémorisée dans la mémoire électronique 36, chaque implant concerné étant connu par l'étape précédente.

En remarque, la bibliothèque de connectiques mémorisées dans la mémoire électronique 36 permet de prédéfinir des formes de connectiques adaptées aux implants et piliers existants, et de plus compatibles avec le procédé de fabrication choisi, dans ce mode de réalisation par le dispositif de fabrication décrit précédemment.

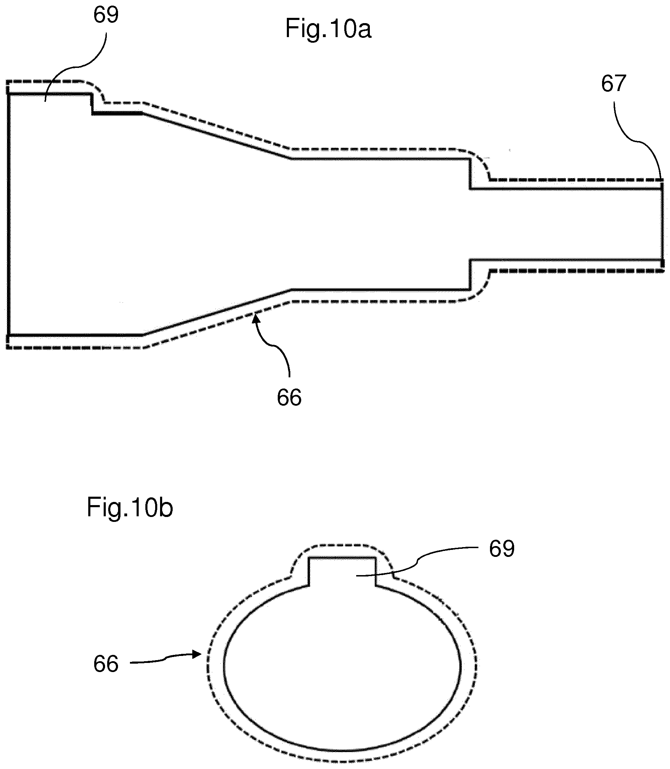

A titre d'exemple non limitatif, le dispositif de fabrication 30 permet de fabriquer une connectique dont un exemple de réalisation est représenté par les figures 10a et 10b. La figure 10a représente une vue en coupe d'une connectique 66 pour une prothèse dentaire sur implant, par un plan médian comprenant l'axe de la prothèse, destiné à un alignement avec l'axe de l'implant. La figure 10b représente une vue en coupe de la connectique 66 pour une prothèse dentaire sur implant par un plan perpendiculaire à l'axe de la prothèse dentaire 60, au niveau d'un détrompeur 69. Sur les deux figures, la forme en trait plein représente une forme théorique, éventuellement définie par le fabriquant de l'implant ou du pilier, alors que la forme en pointillé correspond à la forme adaptée et mémorisée dans la bibliothèque. Cette forme adaptée reste compatible avec la forme théorique mais devient aussi compatible avec le procédé de fabrication choisi, qui comprend dans ce mode de réalisation un usinage avec un outil tel que celui décrit en référence avec la figure 8. Ainsi, les angles droits sont par exemple légèrement arrondis pour permettre leur fabrication avec une fraise de petite dimension, notamment les angles du détrompeur 69. Cette bibliothèque définit de plus des jeux suffisants pour l'éventuelle insertion d'une colle, par exemple de l'ordre de 60 µm, voire 80 µm.

En complément, le procédé de fabrication met ensuite en œuvre une étape E23 de détermination d'une stratégie d'usinage pour fabriquer la connectique déterminée en fin de l'étape précédente E22. Pour cela, des stratégies d'usinage sont prédéfinies dans une mémoire électronique, qui est consultée par le calculateur en charge de cette étape du procédé. Cette étape permet ainsi de définir en sortie les commandes de pilotage du porte outil 33 du dispositif de fabrication 30, transmises au dispositif de fabrication dans une étape de transmission de commandes E24, pour engager automatiquement la fabrication de la connectique de la prothèse dentaire.

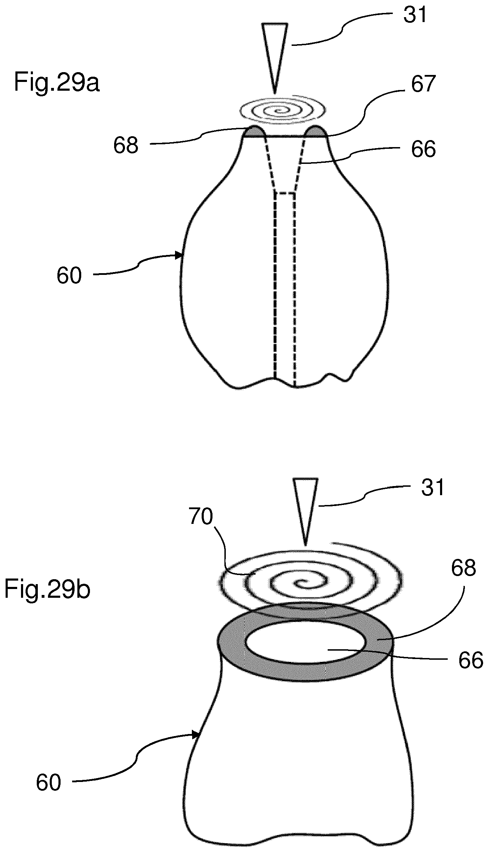

Les figures 29a et 29b illustrent à titre d'exemple les données de type stratégie de fabrication mémorisées dans la mémoire électronique pour former la surface plane 67 extrême de la connectique 66 d'une prothèse dentaire 60. Ces données définissent une stratégie d'usinage pour obtenir la surface plane 67 à l'extrémité de la connectique 66 de la prothèse dentaire, à l'aide notamment d'un outil semblable à la fraise décrite précédemment en référence avec la figure 8. Cette stratégie se traduit par les deux étapes d'usinage suivantes pour former cette surface plane 67 :
- dans un premier temps, fabrication provisoire de cette surface en créant volontairement un surplus 68 de matière ;
- dans un second temps, usinage de ce surplus 68 de matière par un détourage en spirale selon la trajectoire 70 représentée schématiquement, à vitesse réduite, jusqu'à obtenir la surface plane 67.
Une telle approche permet ainsi de former la surface plane 67 en garantissant une surface d'appui sans microfissure ni éclat, et de bonne planéité.

Comme mentionné ci-dessus, l'étape d'usinage de la connectique E6 avec implant est mise en œuvre par des ordres d'usinage transmis par le calculateur 35 à l'outil d'usinage 31 en fonction de la connectique déterminée, et de la stratégie d'usinage prédéterminée.

En remarque, cette approche permet d'automatiser tout le procédé de fabrication d'une prothèse dentaire, et permet par exemple à un praticien de simplement renseigner le type d'implant(s) utilisé(s) en entrée du procédé, pour obtenir en sortie la prothèse dentaire automatiquement fabriquée, dans son propre cabinet, sans intervention humaine ni besoin du savoir-faire d'un expert de l'usinage, avec une grande précision et en un temps réduit. Le procédé permet ainsi à un patient de repartir avec sa restauration dentaire complète et définitive en une seule séance chez le praticien.

Les étapes permettant de former la surface extérieure de la prothèse, imitant au mieux la forme de la dent à remplacer et occupant de manière optimale l'espace disponible, sont semblables à celles existant dans l'état de la technique et ne sont pas décrites ici.

Selon un autre aspect avantageux du mode de réalisation de l'invention, il est possible de fabriquer facilement et avec précision une prothèse dentaire destinée à remplacer au moins deux dents voisines, et nécessitant une fixation sur au moins deux implants, de type bridge. Pour cela, le dispositif de fabrication 30 et le procédé de fabrication décrits précédemment sont utilisés pour fabriquer, à partir d'un bloc 40 unique de plus grand format, notamment de plus grande longueur, représenté par la figure 9b, une prothèse dentaire comprenant plusieurs connectiques pour sa fixation sur plusieurs implants et une surface périphérique unique et continue reproduisant plusieurs dents. La figure 11 représente à titre d'exemple une telle prothèse 60 de type bridge, obtenue par un procédé de fabrication par enlèvement de matière à partir d'un bloc tel que celui représenté par la figure 9b. Les différentes connectiques 66 présentent avantageusement des axes parallèles entre eux.

En remarque, dans une telle prothèse dentaire sur implant à plusieurs connectiques, l'écartement et les types des différentes connectiques sont uniques à chaque fois puisqu'ils dépendent de l'ossature de la zone à restaurer. Ainsi, une telle prothèse à plusieurs connectiques est nécessairement personnalisée. Pour cela, une telle fabrication était impossible avec l'état de la technique décrit précédemment, qui devait se limiter à une seule connectique préformée par bloc.

En remarque, tout ou partie des étapes de calcul réalisées sur un calculateur sont avantageusement traitées par le calculateur 35 du dispositif de fabrication 30. Toutefois, en variante, tout ou partie de ces calculs peuvent être déportés sur un ordinateur externe, puis transmis au dispositif de fabrication 30 par une communication à distance, de préférence automatique, sans intervention d'un opérateur. En effet, ce procédé se fait de préférence de manière automatisée ou partiellement automatisée. De même, la bibliothèque de connectiques peut être déportée sur une mémoire électronique externe.

Cette solution permet une intégration dans un procédé de restauration dentaire, le dispositif de fabrication 30 appartenant à un système plus vaste de restauration dentaire.

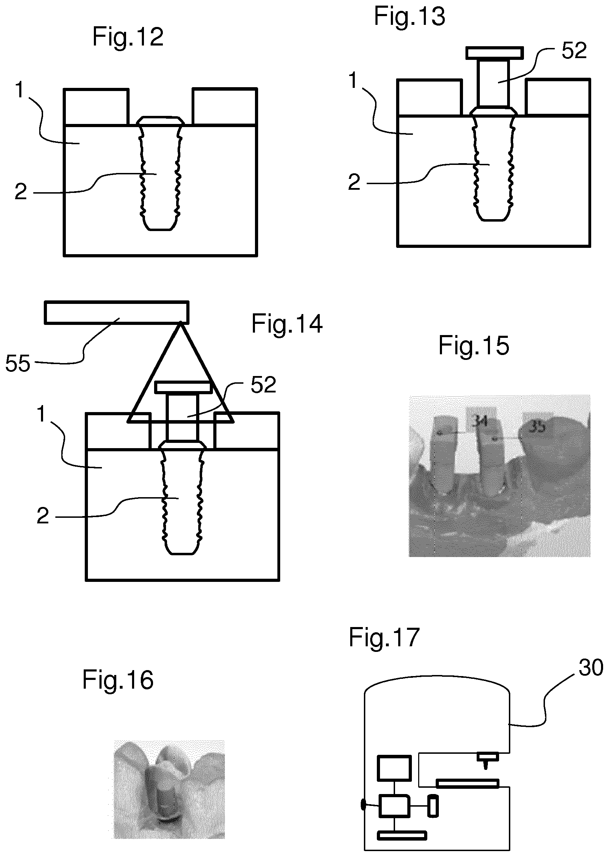

Les figures 12 à 21 illustrent ainsi les étapes d'un procédé de restauration dentaire selon un mode de réalisation de l'invention.

La figure 12 correspond à la figure 1, dans laquelle un implant 2 doté d'une connectique 6 sur son extrémité externe a été fixé dans une mâchoire 1.

La figure 13 représente une étape intermédiaire de fixation d'un élément de repérage 52 sur l'implant 2, couramment dénommé par sa dénomination anglaise de « scan-body », avant une étape de numérisation représentée par la figure 14, à l'aide d'un appareil de numérisation 55 adaptée pour une numérisation en bouche d'un patient, comme un scanner intra-oral. Le procédé met alors en œuvre une étape de transmission des résultats de numérisation à un calculateur, qui reproduit virtuellement la géométrie de la bouche du patient, comme représenté par la figure 15.

A partir de ces données, le calculateur met en œuvre le procédé de fabrication d'une prothèse, tel que décrit précédemment, puis la prothèse est fabriquée par le dispositif de fabrication 30, comme représenté par les figures 16 et 17. Comme mentionné précédemment, l'étape de numérisation permet de remplir une première fonction de définition de la géométrie de la paroi extérieure de la paroi dentaire et éventuellement une seconde fonction de reconnaissance automatique d'au moins un implant concerné par la restauration.

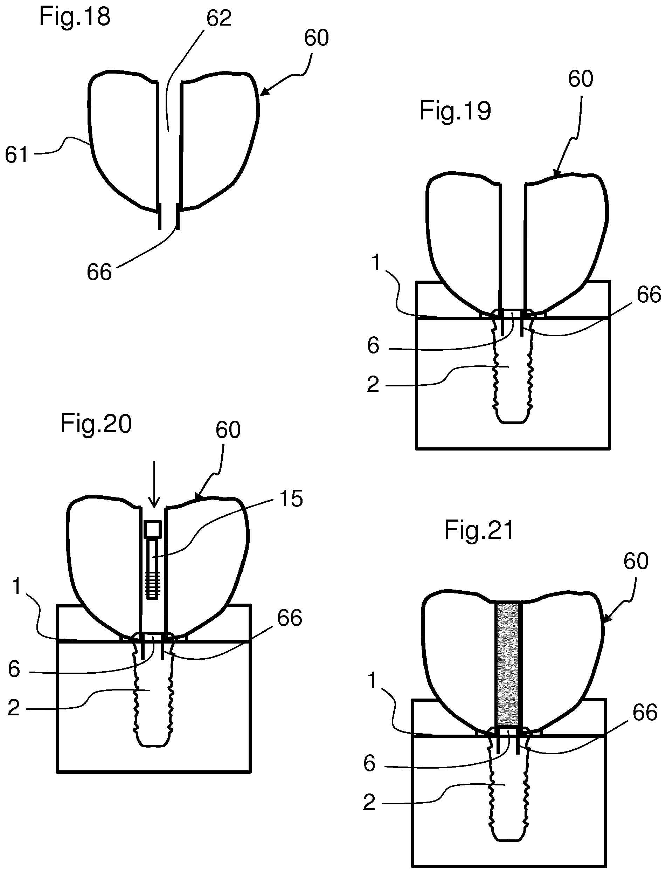

La figure 18 représente schématiquement la prothèse 60 résultante, qui comprend une surface périphérique 61 imitant au mieux la forme d'une vraie dent, percée par une ouverture 62 traversante sensiblement cylindrique, formant dans sa partie inférieure une connectique 66.

Cette prothèse 60 est ensuite directement associée à l'implant 2, leurs connectiques 66, 6 respectives étant directement connectées l'une à l'autre, comme représenté par la figure 19. Ces parties ont des géométries parfaitement correspondantes puisque la prothèse 60 a été fabriquée en fonction de l'implant utilisé. En remarque, cette connexion prévoit un jeu suffisant pour l'éventuelle insertion d'un collage entre la prothèse et l'implant, au niveau de leur connexion. Sur la représentation des figures, la connectique 66 de la prothèse est de type mâle, et s'insère dans la connectique femelle 6 de l'implant. En variante, cette connectique 66 pourrait venir épouser une surface extérieure de l'implant 2. Selon une autre variante, l'implant pourrait disposer d'une connectique mâle, qui viendrait s'insérer dans une connectique femelle de la prothèse dentaire 60.

Enfin, l'association de la prothèse 60 et de l'implant 2 est verrouillée au moyen d'une vis 15 insérée dans l'ouverture traversante 62 de la prothèse, comme représenté en figure 21, afin de mettre en œuvre un vissage dans l'implant 2, et le positionnement de sa tête en appui sur une butée formée dans la connectique 66 de la prothèse 60. L'opération est finalisée par le rebouchage de la prothèse 60, comme représenté en figure 21.

En remarque, ce procédé de restauration présente la particularité de permettre la connexion directe de la prothèse sur un implant, sans nécessité de composant intermédiaire, au contraire des solutions de l'état de la technique. Cela est notamment possible et performant grâce à l'augmentation de la précision de la géométrie de la prothèse fabriquée par le mode de réalisation de l'invention.

Ce procédé de connexion direct résout aussi le problème technique de simplification des procédés de restauration existants. Ainsi, en variante, ce procédé pourrait être mis en œuvre avec une prothèse fabriquée différemment du procédé de fabrication décrit précédemment, notamment en deux étapes d'usinage distinctes, voire réalisées par deux machines distinctes.

Naturellement, le procédé de restauration ne se limite pas à celui décrit ci-dessus. Ainsi, en variante, la prothèse fabriquée selon le mode de réalisation de l'invention peut naturellement être utilisée pour la mise en œuvre d'une restauration dentaire implémentant le principe connu d'utilisation d'un pilier intermédiaire entre l'implant et la prothèse. Un tel procédé de restauration comprendrait alors des étapes initiales similaires aux étapes décrites en référence avec les figures 12 à 17, puis l'association de la prothèse obtenue avec un pilier 3 pour finaliser le procédé de restauration de manière semblable à l'état de la technique décrit référence avec les figures 2 à 5.

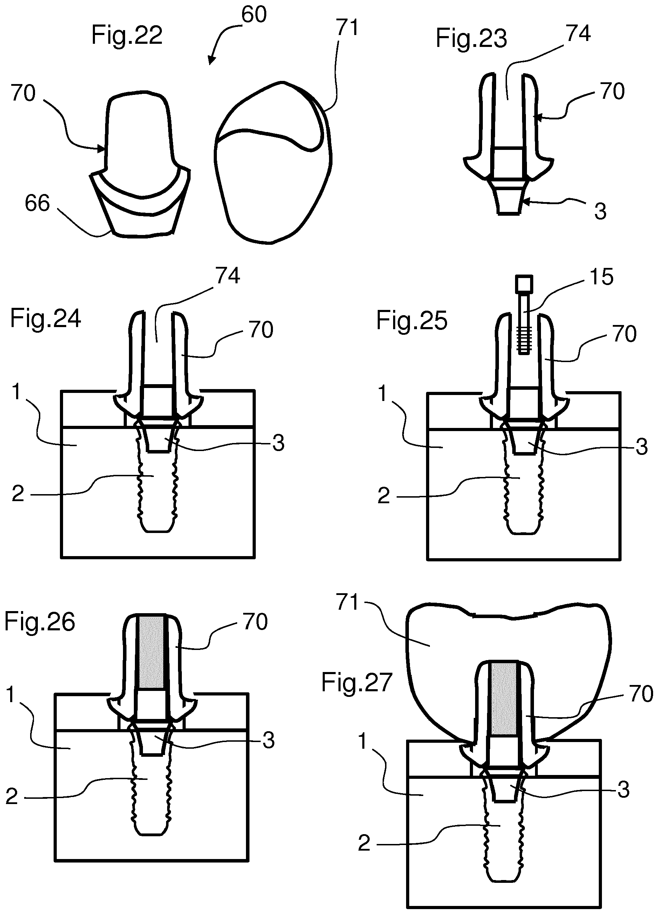

Les figures 22 à 27 illustrent une autre variante de réalisation du procédé de restauration selon le mode de réalisation de l'invention. Dans cette variante, le procédé de restauration comprend d'abord des étapes initiales similaires aux étapes décrites en référence avec les figures 12 à 17. Dans cette variante, la prothèse 60, illustrée en vue en perspective de dessus sur la figure 22, se différencie des réalisations précédentes en ce qu'elle se présente en deux parties distinctes, une partie centrale appelée moignon ou chape 70, et une partie extérieure 71. La chape 70 comprend la connectique 66 fabriquée selon les étapes décrites précédemment, alors que la partie extérieure comprend la surface périphérique imitant la dent. Selon un mode de réalisation, les deux parties 70, 71 de la prothèse 60 sont fabriquées avec le dispositif de fabrication 30 à partir de deux blocs distincts.

Ensuite, la connexion avec un implant 2 est obtenue par l'intermédiaire d'un pilier 3. Pour cela, la chape 70 est ensuite fixée à un pilier 3, comme représenté par la figure 23, puis le pilier 3 est fixé sur l'implant 2, comme représenté par la figure 24. Cet ensemble est solidarisé par une vis 15, puis l'ouverture 74 traversante de la chape 70 est rebouchée, pour atteindre le résultat représenté par la figure 26. Enfin, la partie extérieure 71 de la prothèse 60 est fixée sur la chape 70, par exemple par collage de la surface de sa connectique sur la surface extérieure de la chape 70, pour atteindre le résultat représenté par la figure 27.

Les procédés de restauration précédents ont tous été décrits avec l'utilisation d'une vis 15 de verrouillage de la fixation sur un implant. En variante, tout autre dispositif de fixation, mécanique ou chimique, par collage, sans vis, pourrait être implémenté.

De plus, comme explicité auparavant, le procédé de restauration décrit ci-dessus peut être implémenté de manière similaire pour la fabrication et la fixation d'un bridge, c'est-à-dire d'une prothèse dentaire comprenant plusieurs connectiques pour une fixation simultanée sur plusieurs implants afin de remplacer plusieurs dents voisines manquantes.

Les modes de réalisation précédents ont été illustrés à titre d'exemples non limitatifs et il est naturellement possible d'envisager d'autres modes de réalisation, par exemple en combinant les modes de réalisation décrits. Ainsi, dans tous les modes de réalisation décrits, il est possible de fabriquer une prothèse dentaire en plusieurs parties, par exemple en deux parties formant un moignon ou chape et une partie périphérique, comme dans la dernière réalisation. Dans un tel cas, les deux étapes d'usinage peuvent être réalisées sur la même machine, mais potentiellement en deux opérations distinctes, successives ou simultanées. Ces deux étapes utilisent deux blocs pleins distincts, au lieu du bloc unique utilisé de préférence dans les autres réalisations décrites.

Le dispositif de fabrication décrit précédemment permet avantageusement à un même dispositif de fabrication d'usiner avec un même outil d'usinage, notamment la fraise décrite à titre d'exemple en référence à la figure 8, la globalité d'une prothèse dentaire sur implant, à une ou plusieurs connectique(s).

D'autre part, comme cela ressort de la description précédente, les modes de réalisation précédents résolvent tous un problème technique de simplification, accélération, et amélioration de la fabrication d'une prothèse dentaire sur implant par le fait qu'ils proposent une solution permettant la fabrication d'au moins une connectique adaptée pour une connexion sur au moins un implant, qui peut se faire automatiquement ou quasi-automatiquement, et donc par exemple en cabinet dentaire par un praticien n'ayant pas de compétence particulière en machine d'usinage ou autre. Ainsi, dans un mode particulier de l'invention porte aussi sur un procédé de fabrication d'une prothèse dentaire, qui met en œuvre les étapes suivantes :
E21 : détermination automatique ou par saisie par l'intermédiaire d'une interface homme machine d'une ou plusieurs référence(s) de (ou des) implant(s) concerné(s) par une restauration dentaire, transmission de cette ou de ces donnée(s) à un calculateur qui met en œuvre ce procédé de fabrication ;
E22 : sélection par ledit calculateur de la géométrie de la connectique adaptée à chaque implant parmi une bibliothèque mémorisée dans la mémoire électronique ;
E23 : éventuellement, lecture dans une mémoire électronique de données de stratégies de fabrication, comme des stratégies d'usinage ;
E24 : transmission de commandes de fabrication à un dispositif de fabrication, et mise en œuvre de l'étape de fabrication de la ou les connectique(s) E6 de la prothèse dentaire et de l'étape de fabrication de la paroi extérieure E5 de la prothèse dentaire, avec le même dispositif de fabrication, le même outil, en une même opération à partir d'un bloc plein.

Tous les modes de réalisation précédents présentent le même intérêt de permettre une fabrication d'une connectique sur implant d'une prothèse dentaire sur implant en cabinet dentaire, ce qui apporte la souplesse et les avantages explicités précédemment. En remarque, l'invention s'intéresse au domaine de la prothèse dentaire sur implant, directe ou indirecte, ce qui présente la particularité et la difficulté technique des très faibles dimensions. A titre d'exemple non limitatif, la restauration sur implant nécessite notamment la fabrication d'au moins une connectique dont au moins une partie terminale est inscrite dans un cylindre de diamètre inférieur ou égal à 7 mm, et même inférieur ou égale à 4 mm voire 3 mm pour des connectiques internes par exemple coniques ou cylindriques. Une telle connectique comprend une portion extrême de plus petite dimension que les valeurs mentionnées ci-dessus, plus proche d'un diamètre de cylindre de 2 mm. Une telle connectique comprend de plus des formes complexes, comme un détrompeur, qui peut être formé par une protubérance ou une partie creuse, qui remplit la fonction de bonne orientation de la prothèse et la fonction de maintien en rotation. Ainsi, la fabrication d'une prothèse sur implant comprend des exigences très élevées, et ne peut pas être comparée à la fabrication d'une prothèse hors implant.

## Revendications

1. Procédé de fabrication d'une prothèse dentaire destinée à une fixation sur un implant, comprenant une étape de fabrication de la paroi extérieure (E5) de la prothèse dentaire et une étape de fabrication d'au moins une connectique (E6) destinée à une fixation sur au moins un implant en une même opération sur un même dispositif de fabrication à partir d'un bloc plein (40), ces étapes de fabrication de la prothèse dentaire (E5, E6) étant des étapes d'usinage qui utilisent un même outil d'usinage (31), **caractérisé en ce que** la géométrie de ladite connectique adaptée audit au moins un implant concerné est sélectionnée parmi une bibliothèque mémorisée dans une mémoire électronique.

2. Procédé de fabrication d'une prothèse dentaire selon la revendication précédente, **caractérisé en ce que** l'étape de fabrication d'une connectique (E6) avec au moins un implant de la prothèse dentaire comprend la fabrication d'une connectique adaptée pour une connexion directe sur un implant (2), ou pour une connexion avec une ou plusieurs pièce(s) intermédiaire(s), comme un pilier (3), destinée(s) à une fixation sur un implant (2).

3. Procédé de fabrication d'une prothèse dentaire selon l'une des revendications précédentes, **caractérisé en ce qu'**il comprend les étapes de fabrication de la paroi extérieure (E5) de la prothèse dentaire et de fabrication d'une connectique (E6) destinée à une fixation sur un implant par enlèvement de matière, à partir d'un bloc plein (40) en disilicate de lithium, ou en céramique feldspathique, en nano-composite, en zircone, en matériau provisoire comme du PMMA, ou du PEEK, un matériau métallique.

4. Procédé de fabrication d'une prothèse dentaire selon l'une des revendications précédentes, **caractérisé en ce qu'**il comprend les étapes préalable suivantes :
- Détermination de la forme de la paroi extérieure (E1) de la prothèse dentaire à fabriquer, par un calculateur ;
- Détermination de la connectique (E2) totale avec un implant de la prothèse dentaire à fabriquer, par un calculateur.

5. Procédé de fabrication d'une prothèse dentaire selon la revendication précédente, **caractérisé en ce que** l'étape de détermination de la connectique (E2) avec un implant comprend les sous-étapes suivantes :
- numérisation (E21) intra-buccale au niveau de la zone concernée et/ou saisie par une interface homme machine de données déterminant le type d'implant, et transmission des données de numérisation ou de saisies à un calculateur ;
- sélection (E22) par un calculateur de la géométrie de la connectique adaptée audit au moins un implant concerné parmi une bibliothèque mémorisée dans une mémoire électronique.

6. Procédé de fabrication d'une prothèse dentaire selon la revendication précédente, **caractérisé en ce qu'**il comprend les étapes complémentaires de :
- lecture (E23) dans une mémoire électronique de données de stratégies de fabrication, comme des stratégies d'usinage ;
- transmission (E24) de commandes de fabrication à un dispositif de fabrication.

7. Procédé de fabrication d'une prothèse dentaire selon l'une des revendications précédentes, **caractérisé en ce qu'**il comprend une étape de fabrication de plusieurs connectiques (E6) par enlèvement de matière pour fabriquer une prothèse dentaire destinée à une fixation sur plusieurs implants à partir d'un bloc (40) unique.

8. Dispositif de fabrication d'une prothèse dentaire destinée à une fixation sur un implant, comprenant un porte-outil (33) pour un outil (31) et un calculateur (35), **caractérisé en ce que** le calculateur est adapté pour exécuter les étapes de la méthode de la revendication 1.

9. Dispositif de fabrication d'une prothèse dentaire selon la revendication 8, **caractérisé en ce qu'**il comprend un outil d'usinage (31) qui est une fraise d'usinage au moins en partie conique, de longueur supérieure ou égale à 17 mm, et comprenant une extrémité inscrite dans un cylindre de diamètre inférieur ou égal à 1,05 mm.

10. Dispositif de fabrication d'une prothèse dentaire selon l'une des revendications 8 à 9, **caractérisé en ce qu'**il comprend une mémoire électronique (36) liée au calculateur (35) sur laquelle est stockée une bibliothèque de connectiques avec implant pour une prothèse dentaire sur implant.

11. Dispositif de fabrication d'une prothèse dentaire selon l'une des revendications 8 à 10, **caractérisé en ce qu'**il comprend une interface homme machine permettant à un opérateur de saisir un modèle d'implant utilisé.

12. Système de restauration dentaire, **caractérisé en ce qu'**il comprend un dispositif de numérisation intra-buccal (55) et un dispositif de fabrication d'une prothèse dentaire (30) selon l'une des revendications 8 à 11, et un dispositif de communication entre le dispositif de numérisation intra-buccal et le dispositif de fabrication dentaire.

13. Support informatique lisible par un calculateur, **caractérisé en ce qu'**il comprend un programme informatique enregistré comprenant des moyens de codes de programme informatique de mise en œuvre d'un procédé de fabrication d'une prothèse dentaire destinée à une fixation sur un implant, qui conduisent le dispositif selon la revendication 8 à exécuter les étapes de la méthode selon la revendication 1.

## Patentansprüche

1. Verfahren zur Herstellung einer Zahnprothese, die für eine Fixierung auf einem Implantat bestimmt ist, umfassend einen Schritt der Herstellung der Außenwand (E5) der Zahnprothese und einen Schritt der Herstellung mindestens eines Anschlusselements (E6), das für eine Fixierung auf mindestens einem Implantat bestimmt ist, in demselben Vorgang auf derselben Herstellungsvorrichtung aus einem festen Block (40), wobei diese Schritte zur Herstellung der Zahnprothese (E5, E6) Schritte einer maschinellen Bearbeitung sind, die dasselbe Bearbeitungswerkzeug (31) verwenden, **dadurch gekennzeichnet, dass** die Geometrie des genannten Anschlusselements an dem genannten mindestens einen betreffenden Implantat aus einer Bibliothek ausgewählt wird, die in einem elektronischen Speicher gespeichert ist.

2. Verfahren zur Herstellung einer Zahnprothese nach dem vorhergehenden Anspruch, **dadurch gekennzeichnet, dass** der Schritt der Herstellung eines Anschlusselements (E6) an mindestens ein Implantat der Zahnprothese die Herstellung eines Anschlusselements umfasst, das für eine direkte Verbindung auf einem Implantat (2) oder für eine Verbindung mit einem oder mehreren Zwischenstück (en), wie einer Stütze (3), geeignet ist, das (die) für eine Fixierung auf dem Implantat (2) bestimmt ist (sind).

3. Verfahren zur Herstellung einer Zahnprothese nach einem der vorhergehenden Ansprüche, **dadurch gekennzeichnet, dass** es die Schritte der Herstellung der Außenwand (E5) der Zahnprothese und der Herstellung eines Anschlusselements (E6) umfasst, das für eine Fixierung auf einem Implantat durch Entfernen von Material bestimmt ist, aus einem festen Block (40) aus Lithiumdisilikat, oder aus Feldspatkeramik, aus einem Nano-Verbundstoff, aus Zirkon, aus einem provisorischen Material, wie PMMA, oder PEEK, oder einem metallischen Material.

4. Verfahren zur Herstellung einer Zahnprothese nach einem der vorhergehenden Ansprüche, **dadurch gekennzeichnet, dass** es die folgenden vorherigen Schritte umfasst:
- Bestimmen der Form der Außenwand (E1) der herzustellenden Zahnprothese durch einen Rechner;
- Bestimmen des gesamten Anschlusselements (E2) mit einem Implantat der herzustellenden Zahnprothese durch einen Rechner.

5. Verfahren zur Herstellung einer Zahnprothese nach dem vorhergehenden Anspruch, **dadurch gekennzeichnet, dass** der Schritt der Bestimmung des Anschlusselements (E2) mit einem Implantat die folgenden Teilschritte umfasst:
- intrabukkale Digitalisierung (E21) auf der Ebene der betreffenden und/oder erfassten Zone durch eine Mensch-Maschinen-Datenschnittstelle, die den Typ des Implantats bestimmt, und Übertragung der Digitalisierungs- oder Erfassungsdaten zu einem elektronischen Speicher;
- Auswählen (E22) der Geometrie des Anschlusselements, das für mindestens ein betreffendes Implantat geeignet ist, aus einer Bibliothek, die in einem elektronischen Speicher gespeichert ist, durch einen Rechner.

6. Verfahren zur Herstellung einer Zahnprothese nach dem vorhergehenden Anspruch, **dadurch gekennzeichnet, dass** es die komplementären Schritte umfasst:
- Lesen (E23) von Daten über Herstellungsstrategien, wie maschinelle Bearbeitungsstrategien, in einen elektronischen Speicher;
- Übertragen (E24) von Herstellungsbefehlen an eine Herstellungsvorrichtung.

7. Verfahren zur Herstellung einer Zahnprothese nach einem der vorhergehenden Ansprüche, **dadurch gekennzeichnet, dass** es einen Schritt der Herstellung mehrerer Anschlusselemente (E6) durch Entfernen von Material zur Herstellung einer Zahnprothese, die für eine Fixierung auf mehreren Implantaten bestimmt ist, aus einem einzigen Block (40) umfasst.

8. Vorrichtung zur Herstellung einer Zahnprothese, die für eine Fixierung auf einem Implantat bestimmt ist, umfassend einen Werkzeugträger (33) für ein Werkzeug (31) und einen Rechner (35), **dadurch gekennzeichnet, dass** der Rechner dafür geeignet ist, um die Schritte des Verfahrens nach Anspruch 1 auszuführen.

9. Vorrichtung zur Herstellung einer Zahnprothese nach Anspruch 8, **dadurch gekennzeichnet, dass** sie ein Bearbeitungswerkzeug (31) umfasst, das ein mindestens teilweise konisches Fräswerkzeug ist, mit einer Länge größer oder gleich 17 mm, und umfassend ein Ende, das in einen Zylinder mit einem Durchmesser kleiner oder gleich 1,05 mm eingesetzt ist.

10. Vorrichtung zur Herstellung einer Zahnprothese nach einem der Ansprüche 8 bis 9, **dadurch gekennzeichnet, dass** sie einen elektronischen Speicher (36) umfasst, der mit einem Rechner (35) verbunden ist, auf dem eine Bibliothek von Anschlusselementen mit einem Implantat für eine Zahnprothese auf einem Implantat gespeichert ist.

11. Vorrichtung zur Herstellung einer Zahnprothese nach einem der Ansprüche 8 bis 10, **dadurch gekennzeichnet, dass** sie eine Mensch-Maschinen-Schnittstelle umfasst, die es einem Bediener gestattet, ein verwendetes Implantatmodell zu erfassen.

12. System zur Zahnrestauration, **dadurch gekennzeichnet, dass** es eine intrabukkale Digitalisierungsvorrichtung (55) und eine Vorrichtung (30) zur Herstellung einer Zahnprothese nach einem der Ansprüche 8 bis 11, und eine Vorrichtung zur Kommunikation zwischen der intrabukkalen Digitalisierungsvorrichtung und der Zahnherstellungsvorrichtung umfasst.

13. Datenträger, welcher von einem Rechner gelesen werden kann, **dadurch gekennzeichnet, dass** er ein gespeichertes Datenprogramm umfasst, umfassend Datenprogramm-Codemittel zur Durchführung eines Verfahrens zur Herstellung einer für eine Fixierung auf einem Implantat bestimmten Zahnprothese, welche die Vorrichtung nach Anspruch 8 veranlassen, die Schritte des Verfahrens nach Anspruch 1 auszuführen.

## Claims

1. Method for manufacturing a dental prosthesis intended for fixing on to an implant, comprising a step of manufacturing of the outer wall (E5) of the dental prosthesis and a step of manufacturing of at least one connection (E6) intended for fixing on to at least one implant in one and the same operation on one and the same manufacturing device from a solid block (40), these steps of manufacturing of the dental prosthesis (E5, E6) being machining steps which use one and the same machining tool (31), **characterized in that** the geometry of said connection suited to said at least one implant concerned is selected from a library stored in an electronic memory.

2. Method for manufacturing a dental prosthesis according to the preceding claim, **characterized in that** the step of manufacturing of a connection (E6) with at least one implant of the dental prosthesis comprises the manufacturing of a connection suitable for a direct connection on to an implant (2), or for a connection with one or more intermediate piece(s), such as a post (3), intended for fixing on to an implant (2).

3. Method for manufacturing a dental prosthesis according to one of the preceding claims, **characterized in that** it comprises the steps of manufacturing of the outer wall (E5) of the dental prosthesis and of manufacturing of a connection (E6) intended for fixing on to an implant by material removal from a solid block (40) of lithium disilicate, or of feldspathic ceramic, of nano-composite, of zircon, of temporary material such as PMMA, or PEEK, or a metal material.

4. Method for manufacturing a dental prosthesis according to one of the preceding claims, **characterized in that** it comprises the following preliminary steps:
- determination of the form of the outer wall (E1) of the dental prosthesis to be manufactured, by a computer;
- determination of the total connection (E2) with an implant of the dental prosthesis to be manufactured, by a computer.

5. Method for manufacturing a dental prosthesis according to the preceding claim, **characterized in that** the step of determination of the connection (E2) with an implant comprises the following substeps:
- intra-buccal digitization (E21) in the area concerned and/or input through a human-machine interface of data determining the type of implant, and transmission of the digitization or input data to a computer;
- selection (E22) by a computer of the geometry of the connection suited to said at least one implant concerned from a library stored in an electronic memory.

6. Method for manufacturing a dental prosthesis according to the preceding claim, **characterized in that** it comprises the additional steps of:
- reading (E23), in an electronic memory, of data on manufacturing strategies, such as machining strategies;
- transmission (E24) of manufacturing commands to a manufacturing device.

7. Method for manufacturing a dental prosthesis according to one of the preceding claims, **characterized in that** it comprises a step of manufacturing of several connections (E6) by material removal to manufacture a dental prosthesis intended for fixing on to several implants from a single block (40).

8. Device for manufacturing a dental prosthesis intended for fixing on to an implant, comprising a tool-holder (33) for a tool (31) and a computer (35), **characterized in that** the computer is adapted to perform the steps of the method of claim 1.

9. Device for manufacturing a dental prosthesis according to Claim 8, **characterized in that** it comprises a machining tool (31) which is an at least partly conical machining milling cutter, of a length greater than or equal to 17 mm, and comprising an end inscribed in a cylinder with a diameter less than or equal to 1.05 mm.

10. Device for manufacturing a dental prosthesis according to one of Claims 8 to 9, **characterized in that** it comprises an electronic memory (36) linked to the computer (35) on which is stored a library of connections with implant for a dental prosthesis on implant.

11. Device for manufacturing a dental prosthesis according to one of Claims 8 to 10, **characterized in that** it comprises a human-machine interface allowing an operator to input an implant model used.

12. Dental reconstruction system, **characterized in that** it comprises an intra-buccal digitization device (55) and a device for manufacturing a dental prosthesis (30) according to one of Claims 8 to 11, and a communication device between the intra-buccal digitization device and the dental manufacturing device.

13. Computer-readable computer medium, **characterized in that** it comprises a stored computer program comprising computer program code means for implementing a method for manufacturing a dental prosthesis intended for fixing on to an implant, which leads the device according to Claim 8 to perform the steps of the method of claim 1.
